# Europäisches Patentamt

## European Patent Office

## Office européen des brevets

(19)

(11) Veröffentlichungsnummer: **0 026 798**
**A1**

(12) # EUROPÄISCHE PATENTANMELDUNG

(21) Anmeldenummer: **79200670.2**

(22) Anmeldetag: **15.11.79**

(51) Int. Cl.³: **F 01 K 3/06,** F 01 K 17/00

(30) Priorität: **05.10.79  CH 9000/79**

(43) Veröffentlichungstag der Anmeldung: **15.04.81**
**Patentblatt 81/15**

(84) Benannte Vertragsstaaten: **AT BE CH DE FR GB IT LU NL SE**

(71) Anmelder: **BBC Brown, Boveri & Cie.**
**(Aktiengesellschaft), CH-5401 Baden (CH)**

(72) Erfinder: **Kehlhofer, Rolf, Breitestrasse 8,**
**CH-8157 Dielsdorf (CH)**

(54) **Verfahren zur schnellen Leistungserhöhung einer Dampfturbinenanlage.**

(57)    Um bei positiven Lastsprüngen die Leistung der Dampfturbinenanlage sprungartig erhöhen zu können, zieht man während dem Normalbetrieb der Anlage den erforderlichen Prozeßdampf von einer Entnahmestelle einer Turbine (3) ab, wobei gleichzeitig mittels von einer Abzapfstelle aus dem Hochdruckteil der Turbine (3) stammender Dampf und/oder mittels Frischdampf ein Dampfspeicher (11) gefüllt oder gefüllt gehalten wird.

Zur sprungartigen Leistungserhöhung des Generators (17) unterbricht man die Entnahme von Prozeßdampf von der Turbine (3) und bezieht dafür den Prozeßdampf aus dem Dampfspeicher (11), so daß dem Kondensationsteil der Turbine (3) automatisch sofort mehr Dampf zugeführt wird.

ACTORUM AG

- 1 -

Verfahren zur schnellen Leistungserhöhung einer
Dampfturbinenanlage

Die Erfindung betrifft ein Verfahren zur schnellen
Leistungserhöhung einer Prozessdampf abgebenden
Dampfturbinenanlage, insbesondere einer mit einem
Elektrogenerator verbundenen Dampfturbinenanlage.

Bei Industriekraftwerken, insbesondere bei Kraftwerken die in einem Stahlwerk aufgestellt sind,
und sich in Ländern befinden, in denen kleine
Verbundnetze vorhanden sind, sollten oft höhere
positive Lastsprünge beherrscht werden. Mittels
der gegenwärtig verwendeten Dampfturbinenanlagen
können höhere positive Lastsprünge erst in etwa
1 Minute ausgeglichen werden, da eine raschere
Steigerung der Turbinenleistung nicht möglich ist.

Aufgabe der vorliegenden Erfindung ist die Schaffung
eines Verfahrens, welches eine schnellere Leistungserhöhung der Dampfturbinenanlage ermöglicht.

- 2 -

Diese Aufgabe wird bei einem Verfahren der eingangs genannten Art erfindungsgemäss dadurch gelöst, dass man während dem Normalbetrieb den erforderlichen Prozessdampf von einer Entnahmestelle einer Turbine abzieht und gleichzeitig mittels von mindestens einer Abzapfstelle aus den Hochdruckteil einer Turbine stammenden Dampf und/oder mittels Frischdampf einen Dampfspeicher füllt oder gefüllt hält, und zur schnellen Leistungserhöhung der Dampfturbinenanlage die Entnahme von Prozessdampf von der Turbine unterbricht und dafür den Prozessdampf aus dem Dampfspeicher bezieht, so dass dem Kondensationsteil der Turbine oder einer Kondensationsturbine sofort mehr Dampf zugeführt wird.

Weiterausgestaltungen des erfindungsgemässen Verfahrens sind Gegenstand der Ansprüche 2 und 3.

Nachstehend wird die Erfindung anhand der Zeichnung beispielsweise erläutert. Es zeigt

Fig. 1 schematisch eine erste beispielsweise Ausführungsform einer Anlage zur Durchführung des erfindungsgemässen Verfahrens; und

Fig. 2 schematisch eine zweite beispielsweise Ausführungsform einer Anlage zur Durchführung des erfindungsgemässen Verfahrens.

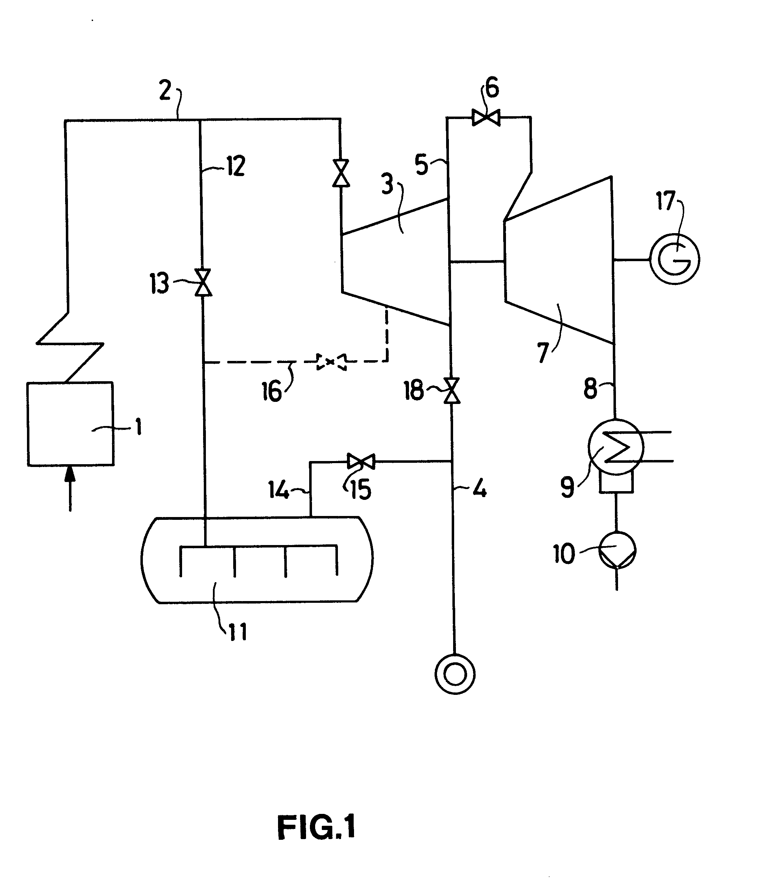

Wie aus Fig.1 ersichtlich, ist bei der dargestellten Anlage der Dampferzeuger 1 über eine Frischdampfleitung 2 mit einer Entnahmeturbine 3 verbunden.

- 3 -

Zur Entnahme des Prozessdampfes, der zum Beispiel
für eine Meerwasserentsalzungsanlage benötigt
wird, ist eine Entnahmeleitung 4 mit dem Austritt der Entnahmeturbine 3 verbunden. Der Austritt der letzteren ist ferner über eine Verbindungsleitung 5 und ein Ueberströmventil 6
mit den Kondensationsteil 7 der Turbine verbunden.
Der Austritt des Kondensationsteiles 7 ist über
eine Verbindungsleitung 8 mit einem Kondensator 9
sowie einer Kondensatpumpe 10 verbunden.

Ferner ist ein Dampfspeicher 11 vorgesehen, welcher
zur Speicherung von Dampf über die Verbindungsleitung 12, in welcher eine Regelarmatur 13 eingebaut ist, mit der Frischdampfleitung 2 verbunden
ist. Abgabe von Dampf ist der Dampfspeicher 11
über eine weitere Verbindungsleitung 14 und eine
darin eingebaute Regelarmatur 15 mit der Entnahmeleitung 4 verbunden.

Als Alternative zur mit der Frischdampfleitung 2
verbundenen Verbindungsleitung 12 ist gestrichelt
eine Verbindungsleitung 16 eingezeichnet, welche
den Dampfspeicher 11 mit einer Anzapfstelle des
Hochdruckteils der Turbine 3 verbindet.

Der von der Turbine 3,7 angetriebene Generator
ist mit 17 bezeichnet.

Bei Normalbetrieb der Anlage liefert die Entnahmeturbine 3 über die Entnahmeleitung 4 den benötigten

- 4 -

Prozessdampf.

Der Dampfspeicher 11 wird über die Verbindungsleitung 12 (oder 16) mit unter Druck stehendem
Dampf gefüllt.

Wenn nun eine plötzliche Laststeigerung auftritt,
wird die in der Entnahmeleitung 4 eingebaute
Regelarmatur 18 geschlossen, wodurch in dem vor
der letzteren sich befindenden Leitungsabschnitt
der Entnahmeleitung 4 ein Druckanstieg erfolgt.
Als Folge davon öffnet das Ueberströmventil 6
voll, was eine sehr rasche Steigerung der abgegebenen elektrischen Leistung ergibt. Gleichzeitig wird das in der den Dampfspeicher 11 mit
der Entnahmeleitung 4 verbindenden Verbindungsleitung 14 vorgesehene Ventil 15 geöffnet, um zu
vermeiden, dass der Druck im Prozessdampfnetz
zusammenbricht. Der fehlende Prozessdampf wird
jetzt aus dem Dampfspeicher 11 entnommen.

Auf diese Weise ist es möglich, innerhalb von 1 bis
2 Sekunden eine grössere Leistungserhöhung zu
erzielen ohne die Abgabe von Prozessdampf in das
Prozessdampfnetz zu unterbrechen.

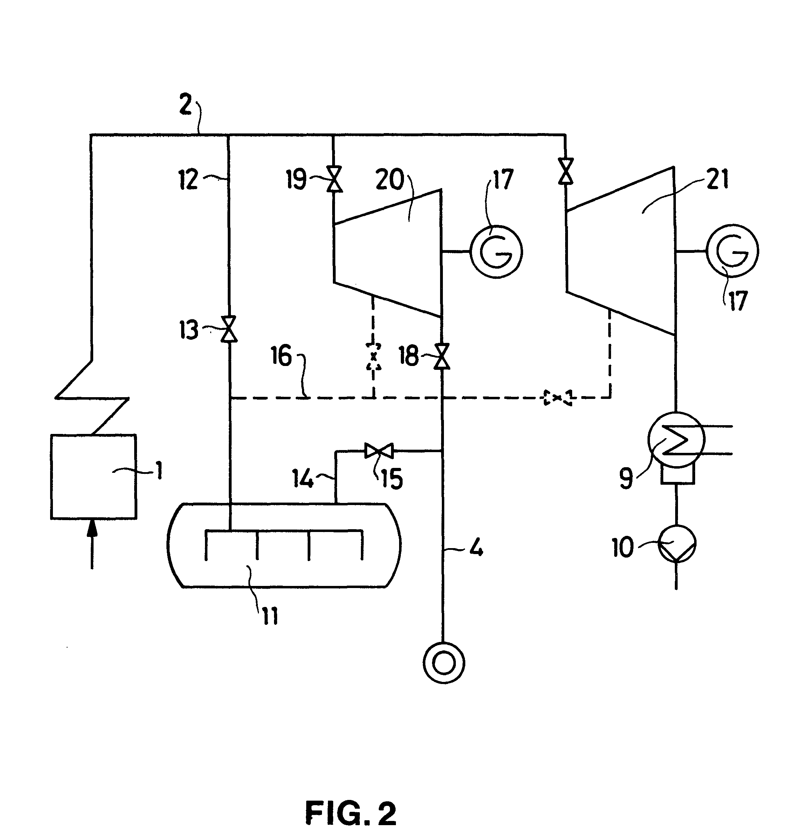

Bei der in Fig.2 dargestellten Anlage sind zu der
in Fig. 1 dargestellten Anlage analoge Teile mit
den gleichen Bezugszeichen versehen.

Die Turbine 20 ist als Gegendruckturbine und die
Turbine 21 als reine Kondensationsturbine ausgebildet.

- 5 -

Tritt eine plötzliche Laststeigerung auf, wird die in der Entnahmeleitung 4 eingebaute Regelarmatur 18 geschlossen, wodurch in dem vor der letzteren sich befindenden Leitungsabschnitt der Entnahmeleitung 4 ein Druckanstieg erfolgt, und als Folge davon das Einlassventil 19 der Gegendruckturbine 20 schliesst, so dass kurzfristig der gesamte Frischdampf in der Kondensationsturbine 21 verwendet werden kann, was die gewünschte sprungartige Leistungserhöhung ergibt.

Die übrigen Teile sind auf Grund der Beschreibung von Fig. 1 nicht mehr näher zu erläutern.

- 6 -

B e z e i c h n u n g s l i s t e

  1 = Dampferzeuger

  2 = Frischdampfleitung

  3 = Hochdruckteil der Turbine

  4 = Entnahmeleitung

  5 = Verbindungsleitung

  6 = Ueberströmventil

  7 = Kondensationsteil der Turbine

  8 = Verbindungsleitung

  9 = Kondensator

10 = Kondensatpumpe

11 = Dampfspeicher

12 = Verbindungsleitung

13 = Regelarmatur

14 = Verbindungsleitung

15 = Regelarmatur

16 = Verbindungsleitung

17 = Generator

18 = Regelarmatur

19 = Einlassventil der Gegendruckturbine

20 = Gegendruckturbine

21 = Kondensationsturbine

– 1 –

P a t e n t a n s p r ü c h e

1. Verfahren zur schnellen Leistungserhöhung einer Prozessdampf abgebenden Dampfturbinenanlage, insbesondere einer mit einem Elektrogenerator verbundenen Dampfturbinenanlage, dadurch gekennzeichnet, dass man während dem Normalbetrieb den erforderlichen Prozessdampf von einer Entnahmestelle einer Turbine abzieht und gleichzeitig mittels von mindestens einer Abzapfstelle aus dem Hochdruckteil einer Turbine stammenden Dampf und/oder mittels Frischdampf einen Dampfspeicher füllt oder gefüllt hält, und zur schnellen Leistungserhöhung der Dampfturbinenanlage die Entnahme von Prozessdampf von der Turbine unterbricht und dafür den Prozessdampf aus dem Dampfspeicher bezieht, so dass dem Kondensationsteil der Turbine oder einer Kondensationsturbine sofort mehr Dampf zugeführt wird.

- 2 -

2. Verfahren nach Anspruch 1, dadurch gekennzeichnet, dass man den Prozessdampf aus einer Entnahme-Kondensationsturbine entnimmt.

3. Verfahren nach Anspruch 1, dadurch gekennzeichnet, dass man eine mit mindestens einer Gegendruckturbine zur Lieferung des Prozessdampfes sowie einer Kondensationsturbine versehene Dampfturbinenanlage verwendet.

**FIG.1**

**FIG. 2**

Europäisches Patentamt

**EUROPÄISCHER RECHERCHENBERICHT**

0026798

Nummer der Anmeldung

EP 79 20 0670

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 410 868 (RUTHS) <br> * Seite 7, Zeilen 28-122; Seite 8, Zeilen 1-22; Abbildung 7 * <br> -- | 1,2 |
| | DE - C - 418.133 (SIEMENS) <br> * Insgesamt * <br> -- | 1,2 |
| A | CH - A - 241 503 (WYSS) | |
| A | DE - C - 488 158 (SCHMIDTSCHE HEISSDAMPF-GES.) <br> ---- | |

**KLASSIFIKATION DER ANMELDUNG (Int. Cl.³)**

F 01 K 3/06
17/00

**RECHERCHIERTE SACHGEBIETE (Int. Cl.³)**

F 01 K

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-01-1981 | V. GHEEL |

EPA form 1503.1  06.78